(19) **Europäisches Patentamt**

**European Patent Office**

**Office européen des brevets**

(11) Veröffentlichungsnummer: **0 066 229**
**B1**

(12) **EUROPÄISCHE PATENTSCHRIFT**

(45) Veröffentlichungstag der Patentschrift:
05.12.84

(21) Anmeldenummer: 82104523.4

(22) Anmeldetag: 24.05.82

(51) Int. Cl.³: **H 04 L 27/14, H 03 D 3/00**

(54) Verfahren und Anordnung zum Demodulieren von FSK-Signalen.

(30) Priorität: 29.05.81 DE 3121444

(43) Veröffentlichungstag der Anmeldung:
08.12.82 Patentblatt 82/49

(45) Bekanntmachung des Hinweises auf die Patenterteilung:
05.12.84 Patentblatt 84/49

(84) Benannte Vertragsstaaten:
AT DE FR GB IT NL SE

(56) Entgegenhaltungen:
EP - A - 0 013 857
DE - A - 2 356 955
DE - A - 2 809 418
US - A - 4 027 266

IBM TECHNICAL DISCLOSURE BULLETIN, Band 17, Nr.
6, November 1974, Armonk, J.D. DWIRE et al. "Digital
Frequency Shift Key Demodulator", Seiten 1718 bis 1725
Doktorarbeit v. G. Ruopp, Universität Stuttgart, Diss,
1975/3984, S. 35 f.

(73) Patentinhaber: Siemens Aktiengesellschaft, Berlin und
München Wittelsbacherplatz 2, D-8000 München 2 (DE)

(72) Erfinder: Fischer, Reinhard, Dipl.-Ing., Pickelstrasse 4,
D-8000 München 19 (DE)

## Beschreibung

Die Erfindung betrifft ein Verfahren und eine Anordnung zum Demodulieren von FSK-Signalen, bei dem die Nulldurchgänge der FSK-Signale erfasst und weiterverarbeitet werden unter Verwendung eines digitalen, nicht rekursiven und eine Tiefpasscharakteristik aufweisenden Transversalfilters (z.B. DE-OS Nr. 2356955).

Verfahren zur Demodulation von FSK-Signalen (*Frequency Shift Keying*-Signale, frequenzumgetastete Signale) sind z.B. aus der Doktorarbeit von G. Ruopp, „Die Demodulation frequenzumgetasteter Signale mit Bandbreiten in der Grössenordnung der Mittenfrequenz", Universität Stuttgart, 1975, S. 35 ff., bekannt. In Modems der Datenübertragungstechnik werden heute im wesentlichen Verzögerungsdemodulatoren verwendet, wobei ein Demodulationsverfahren, das unter den Namen Nulldurchgangsdiskriminator oder Monoflop-Demodulator bekannt ist, besondere Bedeutung erreicht hat.

Bei diesem in obengenannter Literaturstelle auf den Seiten 123-125 beschriebenen Verfahren wird jeder Nulldurchgang des FSK-Empfangssignals mit einem Nadelimpuls markiert und durch ein Monoflop bei jedem Nulldurchgang ein Impuls konstanter Amplitude und bestimmter Dauer erzeugt und somit das frequenzmodulierte Eingangssignal in ein pulsweiten-moduliertes Signal umgewandelt. Aus diesem Signal wird in einem nachgeschalteten Demodulatortiefpass die niederfrequente Signalkomponente herausgefiltert. Dieses und ähnliche Verfahren (z.B. DE-OS Nr. 2356955) haben den Nachteil, dass zu ihrer Realisierung sowohl digitale als auch analoge Funktionseinheiten benötigt werden, deren Integration − insbesondere bei der Verwendung von LC- oder RC-Gliedern als aktiver Tiefpass − technologische Probleme aufwirft. Dies trifft insbesondere dann zu, wenn eine besonders leistungsarme Realisierung in CMOS-Technik gefordert wird.

Aufgabe der Erfindung ist es, ein verbessertes Verfahren zur Demodulation von FSK-Signalen anzugeben, das rein digital arbeitet und daher leicht vollintegriert zu realisieren ist und das zusätzlich in einfacher Weise für unterschiedliche Datenraten anwendbar ist.

Diese Aufgabe wird erfindungsgemäss dadurch gelöst, dass das FSK-Signal eingangsseitig eine von einem Systemtakt gesteuerte Adressen-Erzeugungs-Logik beaufschlagt, die die zum Auslesen einer Impulsantwort aus einem Speicher, in dem die zeitlich aufeinanderfolgenden Werte einer eine zeitliche Dauer $T_{IA}$ aufweisenden Impulsantwort, die das Transversalfilter auf einen Eingangsimpuls bestimmter Dauer gibt, gespeichert sind, benötigten Adressenfolgen liefert, wobei die Adressen-Erzeugungs-Logik die benötigten Adressenfolgen in der Weise liefert, dass jedem eingangsseitigen Nulldurchgang eine bestimmte, noch nicht einem anderen Nulldurchgang zugeordnete Zähladresse zugeordnet wird, die für die Dauer $T_{IA}$ gesteuert vom Systemtakt alle Werte annimmt, die zum Auslesen der Impulsantwort aus dem Speicher notwendig sind, und die nach Abschluss des Auslesevorganges einen Ruhewert annimmt, und dass die während einer Systemtaktperiode aus dem Speicher ausgelesenen Daten summiert werden.

Auf diese Weise gelingt es, durch Aufsummieren der durch einen Nulldurchgang ausgelösten Impulse aus der abgespeicherten Impulsantwortkurve den gleichen Filtereffekt wie mit einem aus dem Stand der Technik bekannten Analogfilter zu erreichen.

Zur Reduzierung der Anzahl der benötigten Bausteine ist es vorteilhaft, die Zähladressen im Zeitmultiplexbetrieb an den Speicher anzulegen, wobei die Multiplextaktfrequenz das N-fache (N: Anzahl der Zähladressen) der Systemtaktfrequenz beträgt. Durch diese Massnahme wird insbesondere nur ein einziger Speicher zur Durchführung des erfindungsgemässen Verfahrens benötigt.

In vorteilhafter Weise kann die Übertragungsgeschwindigkeit des Verfahrens durch Änderung der Systemtaktfrequenz variiert werden.

Eine Anordnung zur Durchführung des erfindungsgemässen Verfahrens kann in der Weise ausgeführt sein, dass ein Speicher vorgesehen ist, in dem die zeitlich aufeinanderfolgenden Werte einer Impulsantwort, die ein digitales, nicht rekursives und eine Tiefpassübertragungscharakteristik aufweisendes Transversalfilter auf einen Eingangsimpuls bestimmter Dauer gibt, gespeichert sind, dass eine von einem FSK-Signal beaufschlagte, von einem Systemtakt gesteuerte Adressen-Erzeugungs-Logik vorgesehen ist, die mindestens so viele Zähladressen aufweist, wie Nulldurchgänge des FSK-Signals in der Zeit $T_{IA}$ maximal zu erwarten sind, und die jedem Nulldurchgang eine bestimmte, noch nicht einem anderen Nulldurchgang zugeordnete Zähladresse, die für die Dauer der Zeit $T_{IA}$ gesteuerte vom Systemtakt alle Werte annimmt, die zum Auslesen der Impulsantwort aus dem Speicher notwendig sind, und die nach Abschluss des Auslesevorganges einen Ruhewert annimmt, zuordnet, dass eine Additionseinheit vorgesehen ist, die in jeder Systemtaktperiode die Summe aller aus dem Speicher ausgelesenen Werte bildet und dass der Additionseinheit ein digitaler Schwellwertschalter nachgeschaltet ist.

Ausgestaltungen der erfindungsgemässen Anordnung sind in Unteransprüchen gekennzeichnet.

Die Erfindung wird im folgenden anhand der Figuren näher erläutert. Dabei zeigen:

die Fig. 1 ein Blockschaltbild eines Ausführungsbeispiels einer Anordnung zur Durchführung des erfindungsgemässen Verfahrens,

die Fig. 2 ein Blockschaltbild eines aus dem Stand der Technik bekannten Nulldurchgangsdiskriminators,

die Fig. 3 bis 8 die an den einzelnen Blöcken des Nulldurchgangsdiskriminators nach Fig. 2 auftretenden Signale,

die Fig. 9 die Impulsantwort eines nicht rekursiven Digitalfilters, und

die Fig. 10 ein Ausführungsbeispiel einer erfindungsgemässen Anordnung.

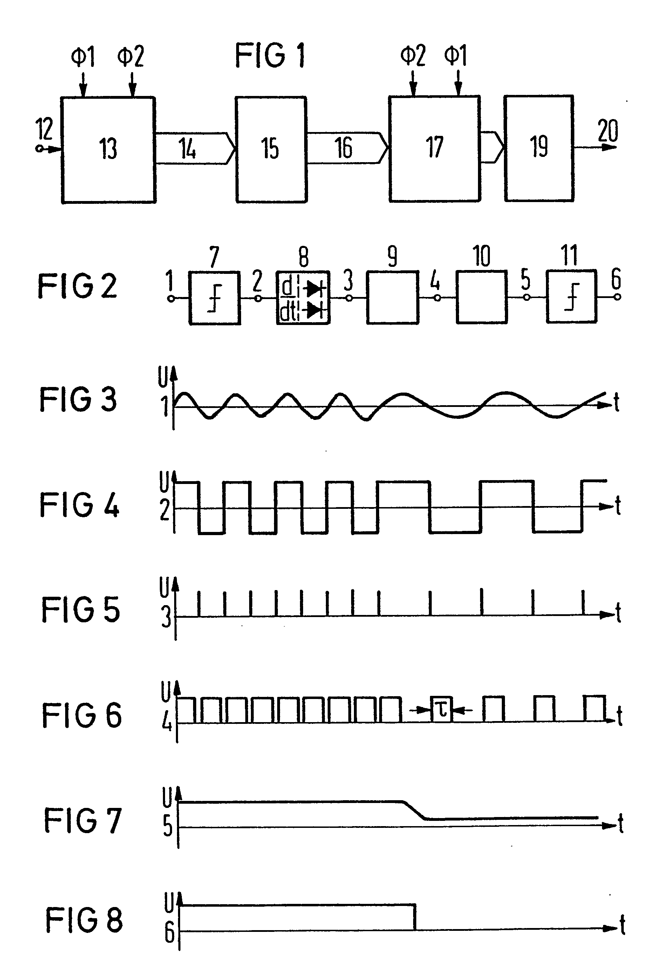

Das in der Fig. 2 gezeigte Blockschaltbild eines Nulldurchgangsdiskriminators ist aus der obengenannten Literaturstelle, S. 123-125, bekannt. Es zeigt fünf Funktionsblöcke 7, 8, 9, 10 und 11. Die an den Eingängen bzw. Ausgängen der Funktionsblöcke auftretenden Signale 1, 2, 3, 4, 5 und 6 sind in Fig. 3 (Eingang Funktionsblock 7), Fig. 4 (Ausgang Funktionsblock 7), Fig. 5 (Ausgang Funktionsblock 8), Fig. 6 (Ausgang Funktionsblock 9), Fig. 7 (Ausgang Funktionsblock 10) und Fig. 8 (Ausgang Funktionsblock 11) dargestellt.

Funktionsblock 7 und Funktionsblock 8 haben die Aufgabe, jeden Nulldurchgang des am Eingang des Funktionsblocks 7 anliegenden FSK-Signals 1 (Fig. 3) mit einem Nadelimpuls zu markieren. Der Funktionsblock 9 wird im einfachsten Fall durch ein Monoflop realisiert (Monoflop-Demodulator), das bei jedem Nulldurchgang einen Impuls konstanter Amplitude und bestimmter Dauer τ erzeugt. Damit ist das frequenzmodulierte Eingangssignal 1 am Ausgang des Funktionsblocks 9 in ein pulsweiten-moduliertes Signal (PDM) 4 (fig. 6) umgewandelt. Aus diesem PDM-Signal wird im nachgeschalteten Tiefpass (Funktionsblock 10) die niederfrequente Signalkomponente herausgefiltert. Das so zurückgewonnene Basisbandsignal, das noch einen gewissen Trägerrest beinhaltet, wird einer Schwellwertschaltung (Funktionsblock 11) zugeführt, um das ursprüngliche Datensignal 6 (Fig. 8) zu regenerieren. Diese Demodulatorschaltung wird heute in weitem Umfang in Modems für die Datentechnik eingesetzt. Dabei werden die Funktionsblöcke 7, 10 und 11 durch Analogschaltungen, die Funktionsblöcke 8 und 9 durch Digitalschaltungen realisiert. Die Integration der konventionellen Demodulatorschaltung wirft durch die Mischung digitaler und analoger Funktionseinheiten jedoch insbesondere bei einer Realisierung in CMOS-Technik erhebliche technologische Probleme auf.

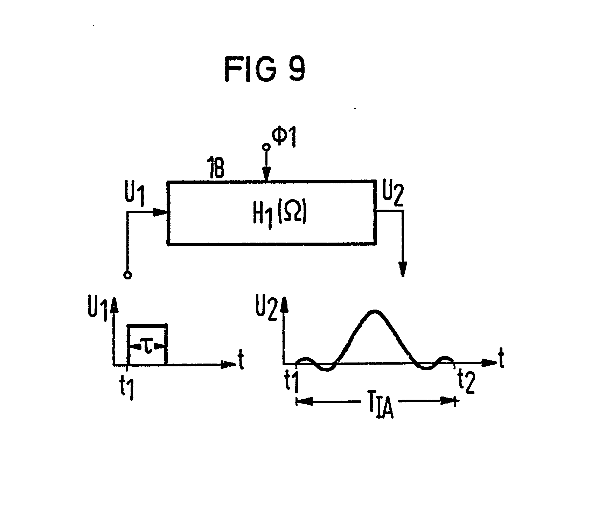

Hier wird durch das erfindungsgemässe Demodulationsverfahren Abhilfe geschaffen. Die Fig. 1 zeigt ein Blockschaltbild einer digitalen Anordnung zur Durchführung des erfindungsgemässen Verfahrens. Der in der Anordnung verwendete Speicher 15 kann beispielsweise ein handelsüblicher Festwertspeicher (ROM) sein. In ihm sind die zeitlich aufeinanderfolgenden Werte einer Impulsantwort $U_2$ gespeichert, die — wie in der Fig. 9 dargestellt — ein digitales, nicht rekursives Transversalfilter 18 mit einer bestimmten Tiefpassübertragungsfunktion $H_1$ (Ω) auf einen Eingangsimpuls $U_1$ mit konstanter (normierter) Amplitude und bestimmter Dauer τ geben würde. Es kann aber auch die Impulsantwort auf einen Impuls mit beliebigem Amplitudenverlauf (z.B. Sägezahn-, Dreieckimpuls) im Speicher 15 gespeichert werden. Die Dauer $T_{IA}$ dieser Impulsantwort $U_2$ ergibt sich in bekannter Weise aus der Anzahl der Filterkoeffizienten, der Taktfrequenz $\phi_1$ des Digitalfilters und der Länge τ des Eingangsimpulses.

Weiterhin ist im Speicher 15 unter einer bestimmten Adresse R als Ruheadresse ein bestimmter Wert, beispielsweise der Wert Null, gespeichert.

Der im Blockschaltbild gezeigte Funktionsblock 13, die Adressen-Erzeugungs-Logik (AEL), wird vom FSK-Signal 12, das bereits in der in Fig. 4 gezeigten Rechteckform vorliegen kann, eingangsseitig beaufschlagt. Die AEL 13 liefert die Adressenfolgen, die zum Auslesen der Impulsantwort aus dem Speicher 15 erforderlich sind. Dabei bestimmt der zeitliche Abstand zwischen den Nulldurchgängen des zu demodulierenden Signales 12 die Adressenerzeugung in der AEL 13 wie folgt:

Innerhalb jeder Taktperiode des Systemtaktes legt die AEL 13 die Zähladressen $A_1$-$A_N$ im Zeitmultiplexbetrieb über den Adressbus 14 an den Speicher 15. Die Anzahl N der Zähladressen entspricht der maximalen Anzahl der während der Zeit $T_{IA}$ zu erwartenden Nulldurchgänge des Signals 12. Änderungen der Zähladressen können im Systemtakt $\phi_1$ erfolgen, der Takt $\phi_2$ (Multiplextakt) steuert den Multiplexbetrieb.

Jeder Nulldurchgang am Eingang der AEL bewirkt, dass eine bestimmte, dem Nulldurchgang zugeordnete Zähladresse (z.B. zunächst die erste oder sonst die nächste, nicht einem Nulldurchgang bereits zugeordnete Zähladresse) für die Zeit $T_{IA}$ — gesteuert durch den Systemtakt $\phi_1$ — alle Werte annimmt, die zum Auslesen der Impulsantwort aus dem Speicher 15 notwendig sind. Ist dieser Auslesevorgang abgeschlossen, so nimmt diese Zähladresse den Wert R als Ruheadresse an. Sie kann jetzt neuerlich durch einen Nulldurchgang aktiviert werden.

Da insgesamt N verschiedene Adressen im Multiplexbetrieb an den Speicher 15 angelegt werden können, ergibt sich für die maximale Frequenz $f_{E\,max}$ des zu demodulierenden Signals, die noch korrekt verarbeitet wird, folgender Zusammenhang:

$$f_{E\,max} = \frac{N}{2\,T_{IA}}$$

Die Additionseinheit 17 bildet in jeder Taktperiode $\phi_1$ die Summe aller N Werte, die vom Multiplextakt $\phi_2$ gesteuert in dieser Zeit aus dem Speicher 17 über den Datenbus 16 ausgelesen werden und bietet diese Werte während der nachfolgenden Taktperiode von $\phi_1$ an ihrem Ausgang an. Damit steht am Ausgang der Additionseinheit 17 das Basisbandsignal 5 in digitaler Form als zeitliche Folge dieser Summe in der in Fig. 7 gezeigten Form zur Verfügung.

Der Additionseinheit 17 ist ein digitaler Komparator 19 nachgeschaltet, der die Funktion eines digitalen Schwellwertschalters hat: Ist die von der Additionseinheit 17 gebildete Summe grösser als ein bestimmter, einstellbarer Schwellwert, so nimmt sein Ausgang den Zustand logisch *high* an. In allen anderen Fällen ist der Ausgangszustand logisch *low*. Der Ausgang 20 des digitalen Komparators 19 liefert unmittelbar das demodulierte Datensignal 6 in der in Fig. 8 gezeigten Form.

Da die Abschneidefrequenz eines Digitalfilters der Abtastfrequenz proportional ist, kann durch Veränderung der Taktfrequenz des Systemtaktes $\phi_1$ und – da bei unterschiedlichen Frequenzen unterschiedliche Ausgangsspannungen am digitalen Komparator 19 anliegen – durch Veränderung des digitalen Schwellwertes im Komparator 19 die erfindungsgemässe Demodulatoranordnung an verschiedene Übertragungsgeschwindigkeiten und Kennfrequenzen angepasst werden. So ist es beispielsweise möglich, für Telephonübertragungszwecke sowohl bei Kennfrequenzen von 1300 und 2100 Hz 1200 bit/s als auch bei Kennfrequenzen von 1300 und 1700 Hz 600 bit/s zu demodulieren. Hierdurch ist die Möglichkeit gegeben, FSK-Modems verschiedener Geschwindigkeitsklassen mit dem gleichen, programmierbaren IC zu realisieren.

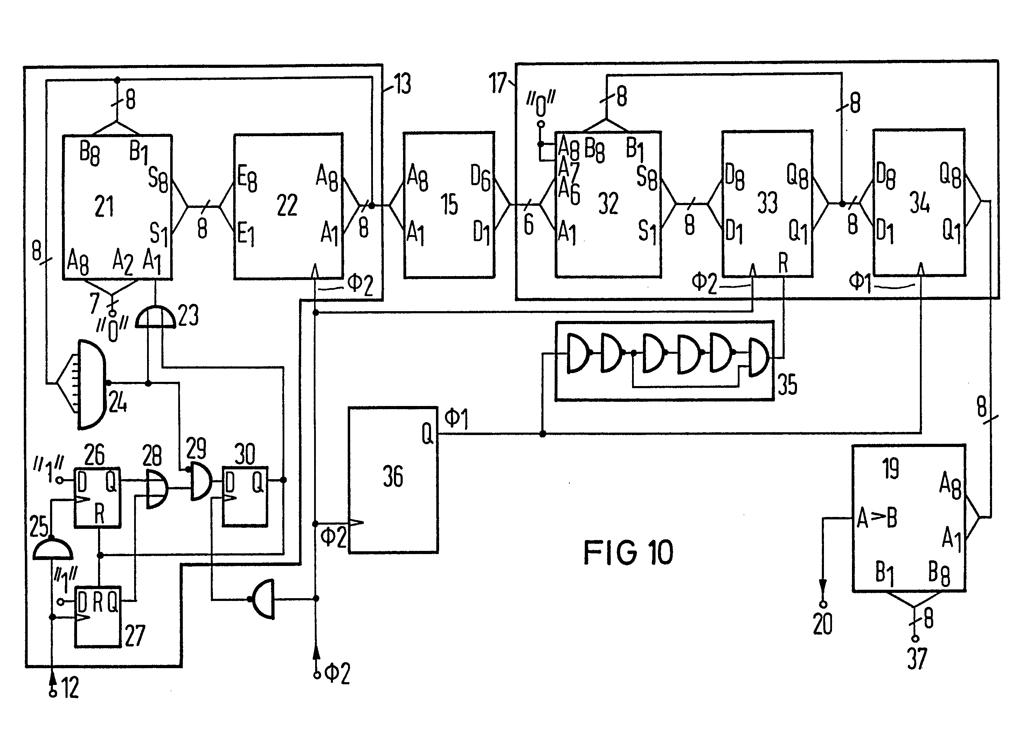

Ein Ausführungsbeispiel für eine Anordnung zur Durchführung des erfindungsgemässen Verfahrens zeigt Fig. 10.

Die AEL 13 besteht im wesentlichen aus einem 8-bit-Volladdierer 21 und einem vom Takt $\phi_2$ gesteuerten 8 × 8-bit-Schieberegister 22. Die Ausgänge $S_1$ bis $S_8$ des Volladdierers 21 sind mit den Eingängen $E_1$ bis $E_8$ des Schieberegisters 22 verbunden, dessen Ausgänge $A_1$ bis $A_8$ sowohl mit den Adresseneingängen $A_1$ bis $A_8$ des als 256 × 6-bit-ROM ausgeführten Speichers 15 als auch mit dem ersten Eingang $B_1$ bis $B_8$ des Volladdierers 21 und einem 8fach NAND-Gatter 24 verbunden sind.

Das FSK-Signal 12 weist die in der Fig. 4 gezeigte Rechteckform, die aus der in der Fig. 3 gezeigten Sinusform z.B. durch einen übersteuerten Operationsverstärker ohne Gegenkopplung gewonnen werden kann, auf. Um jeden Nulldurchgang zu erkennen, wird das Signal 12 über ein erstes D-Flip-Flop 27, dessen D-Eingang auf *high*-Pegel gesetzt ist, und über einen Inverter 25 und ein zweites D-Flip-Flop 26, dessen D-Eingang auf *high*-Pegel gesetzt ist, einem ODER-Gatter 28 zugeführt. Der Ausgang des Gatters 28 und der invertierte Ausgang des Gatters 24 beaufschlagen eingangsseitig das UND-Gatter 29, dessen Ausgang mit dem D-Eingang eines dritten D-Flip-Flops 30 verbunden ist.

Das Flip-Flop 30 wird vom invertierten, von aussen zugeführten Takt $\phi_2$ gesteuert. Sein Ausgang Q ist einerseits mit den Rücksetzeingängen R der Flip-Flops 26 und 27 und andererseits über das ODER-Gatter 23, dessen zweiter Eingang mit dem Ausgang des Gatters 24 verbunden ist, mit der ersten Bitstelle $A_1$ des zweiten Eingangs des Volladdierers 21, dessen weitere Bitstellen $A_2$ bis $A_8$ auf Null gelegt sind, verbunden, und wandelt so eine Ruheadresse bei vorliegendem Nulldurchgang in eine aktive Adresse um, bei gleichzeitiger Rücksetzung der Flip-Flops 26 und 27.

Die Additionseinheit 17 weist einen weiteren 8-bit-Volladdierer 32 und zwei aus acht parallelen D-Flip-Flops bestehende Flip-Flop-Schaltungen 33 und 34 auf. Die ersten sechs Bits $A_1$ bis $A_6$ des ersten Eingangs des Volladdierers 32 sind mit den Datenausgängen $D_1$ bis $D_6$ des Speichers 15

verbunden, die Eingangsbits $A_7$ und $A_8$ sind auf Null gstzt. Die Ausgänge $S_1$ bis $S_8$ des Volladdierers 32 sind mit den D-Eingängen $D_1$ bis $D_8$ der ersten Flip-Flop-Schaltung 33 verbunden, die zum Entkoppeln dient und deren Ausgänge $Q_1$ bis $Q_8$ einerseits mit den zweiten Eingängen $B_1$ bis $B_8$ des Volladdierers 32 und andererseits mit den D-Eingängen $D_1$ bis $D_8$ der zweiten Flip-Flop-Schaltung 34 verbunden sind. Die erste Flip-Flop-Schaltung 33 wird über den Takt $\phi_2$, die zweite Flip-Flop-Schaltung 34 über den mittels des 8fach Teilers 36 gewonnenen Systemtakt $\phi_1$ gesteuert. Die erste Flip-Flop-Schaltung 33 wird vom Systemtakt $\phi_1$, der über eine Laufzeitverzögerungseinrichtung 35 verzögert ist, zurückgesetzt.

Der Komparator 19 ist als 8-bit-Komparator ausgeführt. Seine ersten Eingänge $A_1$ bis $A_8$ sind mit den Ausgängen $Q_1$ bis $Q_8$ der Flip-Flop-Schaltung 34 verbunden, während die zweiten Eingänge $B_1$ und $B_8$ mit einem einstellbaren digitalen Schwellwert 37 beaufschlagbar sind. Am Ausgang des Komparators 19 liegt das Datensignal 20, das den *high*-Zustand annimmt, wenn der am ersten Eingang anliegende Wert den am zweiten Eingang anliegenden Wert übersteigt, in der in der Fig. 8 gezeigten Form an.

Die in der Fig. 10 gezeigte Anordnung ist mit handelsüblichen Bau- bzw. Logikelementen herstellbar. Will man auf einen Zeitmultiplexbetrieb einer solchen Anordnung verzichten, so kann auch für jeden, während der Zeitdauer $T_{IA}$ maximal zu erwartenden Nulldurchgang ein separater Zähler vorgesehen werden, der je ein identisches ROM beaufschlagt, wobei die aus den ROMs ausgelesenen Daten anschliessend addiert und einem Schwellwertschalter zugeführt werden.

## Patentansprüche

1. Verfahren zum Demodulieren von FSK-Signalen (12), bei dem die Nulldurchgänge der FSK-Signale (12) erfasst und weiterverarbeitet werden unter Verwendung eines digitalen, nicht rekursiven und eine Tiefpasscharakteristik aufweisenden Transversalfilters (18), dadurch gekennzeichnet, dass das FSK-Signal (12) eingangsseitig eine von einem Systemtakt ($\phi_1$) gesteuerte Adressen-Erzeugungs-Logik (13) beaufschlagt, die die zum Auslesen einer Impulsantwort aus einem Speicher (15), in dem die zeitlich aufeinanderfolgenden Werte einer eine zeitliche Dauer $T_{IA}$ aufweisenden Impulsantwort, die das Transversalfilter (18) auf einen Eingangsimpuls bestimmter Dauer gibt, gespeichert sind, benötigten Adressenfolgen liefert, wobei die Adressen-Erzeugungs-Logik (13) die benötigten Adressenfolgen in der Weise liefert, dass jedem eingangsseitigen Nulldurchgang eine bestimmte, noch nicht einem anderen Nulldurchgang zugeordnete Zähladresse zugeordnet wird, die für die Dauer $T_{IA}$ gesteuert vom Systemtakt ($\phi_1$) alle Werte annimmt, die zum Auslesen der Impulsantwort aus dem Speicher (15) notwendig sind, und die nach Abschluss des Auslesevorganges einen Ruhewert annimmt, und dass die während einer Systemtaktperiode aus dem Speicher (15) ausgelesenen Daten in einer Addiereinheit (17) summiert werden.

2. Verfahren nach Anspruch 1, dadurch gekennzeichnet, dass die Zähladressen im Zeitmultiplexbetrieb an den Speicher (15) angelegt werden, wobei die Multiplextaktfrequenz ($\phi_2$) das N-fache (N = Anzahl der Zähladressen) der Systemtaktfrequenz ($\phi$) beträgt.

3. Verfahren nach einem der Ansprüche 1 oder 2, dadurch gekennzeichnet, das die Übertragungsgeschwindigkeit des Verfahrens durch Änderung der Systemtaktfrequenz ($\phi_1$) variiert wird.

4. Vorrichtung zur Durchführung des Verfahrens nach einem der Ansprüche 1 bis 3, dadurch gekennzeichnet, dass ein Speicher (15) vorgesehen ist, in dem die zeitlich aufeinanderfolgenden Werte einer Impulsantwort, die ein digitales, nicht rekursives und eine Tiefpassübertragungscharakteristik aufweisendes Transversalfilter (18) auf einen Eingangsimpuls bestimmter Dauer gibt, gespeichert sind, dass eine von einem FSK-Signal (12) beaufschlagte, von einem Systemtakt ($\phi_1$) gesteuerte Adressen-Erzeugungs-Logik (13) vorgesehen ist, die mindestens so viele Zähladressen aufweist, wie Nulldurchgänge des FSK-Signals (12) in der Zeit $T_{IA}$ maximal zu erwarten sind, und die jedem Nulldurchgang eine bestimmte, noch nicht einem anderen Nulldurchgang zugeordnete Zähladresse, die für die Dauer der Zeit $T_{IA}$ gesteuert vom Systemtakt ($\phi_1$) alle Werte annimmt, die zum Auslesen der Impulsantwort aus dem Speicher (15) notwendig sind, und die nach Abschluss des Auslesevorganges einen Ruhewert annimmt, zuordnet, dass eine Additionseinheit (17) vorgesehen ist, die in jeder Systemtaktperiode die Summe aller aus dem Speicher (15) ausgelesenen Werte bildet und dass der Additionseinheit (17) ein digitaler Schwellwertschalter (19) nachgeschaltet ist.

5. Vorrichtung nach Anspruch 4, dadurch gekennzeichnet, dass der Speicher (15) als ROM ausgeführt ist.

6. Vorrichtung nach einem der Ansprüche 4 oder 5, dadurch gekennzeichnet, dass die Adressen-Erzeugungs-Logik (13) einen Volladdierer (21) und ein Schieberegister (22) aufweist, wobei der Ausgang des Volladdierers (21) mit dem Eingang des Schieberegisters (22) und der Ausgang des Schieberegisters (22) mit dem Adresseneingang des Speichers (15) und mit dem ersten Eingang des Volladdierers (21) verbunden sind und wobei der zweite Eingang des Volladdierers (21) mit einer Logik (24, 25, 26, 27, 28, 29, 30) verbunden ist, die einen Nulldurchgang des FSK-Signals (12) bei gleichzeitigem Vorliegen einer Ruheadresse registriert.

7. Vorrichtung nach einem der Ansprüche 4 bis 6, dadurch gekennzeichnet, dass die Additionseinheit (17) einen Volladdierer (32) und zwei D-Flip-Flop- Schaltungen (33, 34) aufweist, wobei der erste Eingang des Volladdierers (32) mit dem Datenausgang des Speichers (15), der Ausgang des weiteren Volladdierers (32) mit den D-Eingängen der ersten Flip-Flop-Schaltung (33) und der Ausgang der ersten Flip-Flop-Schaltung (33) einerseits mit dem zweiten Eingang des Volladdierers (32) und andererseits mit den D-Eingängen der zweiten Flip-Flop-Schaltung (34) verbunden sind.

8. Vorrichtung nach einem der Ansprüche 4 bis 7, dadurch gekennzeichnet, dass ein Komparator (19) vorgesehen ist, dessen erster Eingang mit dem Ausgang der zweiten Flip-Flop-Schaltung (34) verbunden ist und dessen zweiter Eingang mit einem variablen digitalen Schwellwert (37) beaufschlagbar ist.

## Claims

1. A method for demodulating FSK-signals (12) wherein the zero transitions of the FSK-signals (12) are detected and further processed employing a digital, non-recursive transversal filter (18) which has low-pass characteristics, characterised in that at the input end the FSK-signal (12) influences an address-generating logic unit (13) which is controlled by a system clock pulse train ($\phi_1$) and which supplies the address sequences required for reading out a pulse response from a store (15) which stores the values, which are consecutive in terms of time, of a pulse response which has a time duration $T_{IA}$ and which is emitted by the transversal filter (18) in response to an input pulse of a specific duration, where the address-generating logic (13) supplies the required address sequence in that each input-end zero transition is assigned a specific counting address which has not yet been assigned to another zero transition and which, for the duration $T_{IA}$, and under the control of the system clock pulse train ($\phi_1$), assumes all the values which are necessary for reading out the pulse response from the store (15), and which assumes a rest value following the conclusion of the read-out operation, and that the items of data read out from the store (15) during a system clock pulse train period are added in an adder unit (17).

2. A method as claimed in Claim 1, characterised in that the counting addresses are applied in t.d.m. operation to the store (15), where the multiplex clock pulse frequency ($\phi_2$) amounts to N-times the system clock pulse frequency ($\phi_1$) (N = number of the counting addresses).

3. A method as claimed in Claim 1 or 2, characterised in that the transmission speed of the procedure is varied by changing the system clock pulse frequency ($\phi_1$).

4. A device for carrying out the method claimed in one of the Claims 1 to 3, characterised in that a store (15) is provided which stores the values, which are consecutive in time, of a pulse response given by a digital, non-recursive transversal filter (18) which has low-pass transition characteristics, in response to an input pulse, that an address-generating logic (13) is provided which is influenced by an FSK-signal (12), is controlled by a system clock pulse train ($\phi_1$), and which has at least as many counting addresses as the maximum number of likely zero transitions of the FSK-signal (12) during the time $T_A$ and which assigns each zero transition a specific counting address which is not yet assigned to another zero transition and which, for the duration of the time $T_{IA}$, under the control of the system clock pulse train $(\phi_1)$, assumes all the values which are required for the read-out of the pulse response from the store (15) and which assumes a rest value following the conclusion of the read-out operation, that an addition unit (17) is provided which, in each system clock pulse period, forms the sum of all the values read out from the store (15), and that the addition unit (17) is followed by a digital threshold value switch (19).

5. A device as claimed in Claim 4, characterised in that the store (15) comprises a ROM.

6. A device as claimed in Claim 4 or 5, characterised in that the address-generating logic unit (13) has a full-adder (21) and a shift register (22), where the output of the full-adder (21) is connected to the input of the shift register (22) and the output of the shift register (22) is connected to the address-input of the store (15) and to the first input of the full-adder (21), and where the second input of the full-adder (21) is connected to a logic unit (24, 25, 26, 27, 28, 29, 30) which registers a zero transition of the FSK-signal (12) when a rest address occurs simultaneously.

7. A device as claimed in one of the Claims 4 to 6, characterised in that the addition unit (17) has a full-adder (32) and two D-flip-flop circuits (33, 34) where the first input of the full-adder (32) is connected to the data output of the store (15), the output of the further full-adder (32) is connected to the D-inputs of the first flip-flop circuit (33), and the output of the first flip-flop circuit (33) is connected on the one hand to the second input of the full-adder (32) and on the other hand to the D-inputs of the second flip-flop circuit (34).

8. A device as claimed in one of the Claims 4 to 7, characterised in that a comparator (19) is provided whose first input is connected to the output of the second flip-flop circuit (34) and whose second input can be influenced by a variable digital threshold value (37).

## Revendications

1. Procédé pour démoduler des signaux (12) modulés par déplacement de fréquence, dans lequel les passages par la valeur zéro des signaux (12) modulés par déplacement de fréquence sont saisis et sont posttraités avec une mise en œuvre d'un filtre transversal (18) non récursif et présentant une caractéristique passe-bas, caractérisé par le fait que le signal (12) modulé par déplacement de fréquence charge, du côté entrée, une logique de production d'adresses (13) qui est commandée par une cadence de système $(\phi_1)$ et qui fournit les séquences d'adresses qui sont nécessaires pour la lecture d'une réponse impulsionnelle dans une mémoire (15) dans laquelle sont mémorisées les valeurs successives dans le temps d'une réponse impulsionnelle d'une durée $(T_{IA})$ que donne le filtre transversal (18) en réponse à une impulsion d'entrée d'une durée déterminée, la logique de production d'adresses (13) fournissant les séquences d'adresses nécessaires de manière que, à chaque passage par la valeur zéro, du côté entrée, soit adressée une adresse de comptage non encore associée à un autre passage par la valeur zéro et qui assume pour la durée $(T_{IA})$, tout en étant commandée par la cadence du système $(\phi_1)$, toutes les valeurs qui sont nécessaires pour la lecture de la réponse impulsionnelle dans la mémoire (15), et qui assume après le processus de lecture une valeur de repos, et que les données qui sont lues dans la mémoire (15) pendant une période de cadence du système sont additionnées dans un dispositif additionneur (17).

2. Procédé selon la revendication 1, caractérisé par le fait que les adresses de comptage sont appliquées à la mémoire (15) suivant un fonctionnement en multiplexage par répartition dans le temps, la fréquence de la cadence de multiplexage $(\phi_2)$ étant égale à N fois la fréquence de cadence du système $(\phi_1)$ (N = nombre d'adresses de comptage).

3. Procédé selon l'une des revendications 1 ou 2, caractérisé par le fait que la vitesse de transmission du procédé est modifiée par modification de la fréquence de cadence du système $(\phi_1)$.

4. Dispositif pour la mise en œuvre du procédé selon l'une des revendications 1 à 3, caractérisé par le fait qu'il est prévu une mémoire (15) dans laquelle sont mémorisées les valeurs successives dans le temps d'une réponse impulsionnelle que donne, en réponse à une impulsion d'entrée de durée déterminée, un filtre transversal (18) numérique, non récursif et présentant une caractéristique de transmission d'un passe-bas, qu'il est prévu une logique de production d'adresses (13) qui est chargée par un signal modulé par déplacement de fréquence (12) et qui est commandée par la cadence de système $(\phi_1)$, logique qui comporte un nombre d'adresses de comptage au moins égal au nombre de passages par la valeur zéro du signal modulé par déplacement de fréquence (18) auxquels on doit s'attendre au maximum pendant le temps $(T_{IA})$, et qui associe à chaque passage par la valeur zéro une adresse de comptage déterminée non encore associée à un autre passage par la valeur zéro, qui assume, pour la durée du temps $(T_{IA})$, avec commande par la cadence de système $(\phi_1)$, toutes les valeurs qui sont nécessaires pour la lecture de la réponse impulsionnelle dans la mémoire (15) et qui assume, après le processus de lecture, une valeur de repos, qu'il est prévu un dispositif additionneur (17) qui forme, dans chaque période de cadence de système, la somme de toutes les valeurs lues dans la mémoire (15), et que, en aval du dispositif additionneur (17), est monté un commutateur numérique (19) de valeur de seuil.

5. Dispositif selon la revendication 4, caractérisé par le fait que la mémoire (15) est réalisée sous la forme d'un ROM.

6. Dispositif selon l'une des revendications 4 ou 5, caractérisé par le fait que la logique de production d'adresses (13) comporte un additionneur complet (21) et un registre à décalage (22), la sortie de l'additionneur complet (21) étant reliée à l'entrée du registre à décalage (22) et la sortie du registre à décalage (22) étant reliée à l'entrée d'adresses de la mémoire (15) et à la première entrée de l'additionneur complet (21), alors que la seconde entrée de l'additionneur complet (21) est reliée à une logique (24, 25, 26, 27, 28, 29, 30) et qui enregistre un passage par la valeur zéro du signal modulé par déplacement de fréquence (12) lorsque se présente en même temps une adresse de repos.

7. Dispositif selon l'une des revendications 4 à 6, caractérisé par le fait que le dispositif additionneur (17) comporte un additionneur complet (32) et deux circuits flip-flop du type D (33, 34), la première entrée de l'additionneur complet (32) étant reliée à la sortie de donnée de la mémoire (15), la sortie de l'additionneur complet (32) étant reliée avec les entrées D du premier circuit flip-flop (33) et la sortie du premier circuit flip-flop (33) étant reliée, d'une part, avec la seconde entrée de l'additionneur complet (32) et, d'autre part, aux entrées D du second circuit flip-flop (34).

8. Dispositif selon l'une des revendications 4 à 7, caractérisé par le fait qu'il est prévu un comparateur (19) dont la première entrée est reliée à la sortie du second circuit flip-flop (34) et dont la seconde entrée est susceptible d'être chargée avec une valeur de seuil numérique variable (37).

FIG 1

FIG 2

FIG 3

FIG 4

FIG 5

FIG 6

FIG 7

FIG 8

# FIG 9

FIG 10